# EUROPEAN PATENT SPECIFICATION

(11) **EP 3 843 537 B1**
(45) Date of publication and mention of the grant of the patent: **08.06.2022**
(21) Application number: 19737680.9
(22) Date of filing: 28.06.2019
(51) Int. Cl.: A01G 31/02

(54) **A PLANT GROWING CABINET WITH IMPROVED ANTI CLOGGING SYSTEM**
EIN PFLANZENZUCHTSCHRANK MIT VERBESSERTEM ANTI-VERSTOPFUNGSSYSTEM
UNE ARMOIRE DE CULTURE DE PLANTES AVEC UN SYSTÈME ANTI-BOUCHAGE AMÉLIORÉ

(30) Priority: 31.08.2018 TR 201812440
(43) Date of publication of application: 07.07.2021
(73) Proprietor: Arçelik Anonim Sirketi, 34445 Istanbul (TR)
(72) Inventor: ATICI, Omer Alp, 34950 ISTANBUL (TR); TURKEL, Nahil, 34950 ISTANBUL (TR); YESILDAG, Osman, 34950 ISTANBUL (TR); KARAKAYA, Erkan, 34950 ISTANBUL (TR); TUYSUZ, Seckin, 34950 ISTANBUL (TR)
(86) International application number: PCT/EP2019/067447
(87) International publication number: WO 2020/043357

(56) References cited:
- WO-A1-2007/050042
- WO-A1-2012/050529
- KR-B1- 101 105 311
- US-A1- 2013 239 476

## Description

The present invention relates to a plant growing cabinet, in particular to a plant growing cabinet with an anti-clogging system.

Hydroponic cultivation is a method of agriculture based on growing plants without soil and depends on the principle of feeding the plant with water and the nutrients required, to the root environment in required amounts and is practiced in water or solid medium culture. The plants to be grown in soilless agriculture applications are grown in an enclosed plant cabinet wherein levels of water, light, humidity and carbon dioxide density is controlled. During the growth of the plant, all these elements are optimized according to the phase of the plant's growth, and thus the plant is enabled to grow more rapidly and is protected from harmful outer environmental elements (e.g. high levels of humidity, light intensity). During watering of the plants, water that is stored inside the water tank is transferred via a pump, a coupling, a water conduit and in to the growing units respectively. The growing trays are placed inside the growing unit. The perforations at the bottom of the growing trays provides fluid transmission between the growing trays and the growing units. The turf mixture in which the plants are planted contain dust, soil, fibers and similar micro particles which may cause clogging of the water conduit or the perforation. Clogging may cause irreparable damage to the plant growing cabinet. Therefore, it is vital to keep the turf mixture and the aforementioned particles out of the water conduit and the perforations provided on to the growing trays. Another problem encountered by the user is the difficulty of cleaning the growing trays and the growing units after harvest due to long exposure of the aforementioned parts to the turf mixture.

A prior art publication in the technical field of the present invention may be referred to as KR101105311B1 among others, the document disclosing a growing unit having a container in which a filter and a tray is removable placed.

An objective of the present invention is to prevent clogging of the water conduits of the plant growing cabinet and perforations provided under the growing tray.

Another objective of the present invention is to provide the users a plant growing cabinet having improved and simplified cleaning properties.

The method realized to achieve the aim of the present invention and disclosed in the first claim and the dependent claims comprises a plant growing cabinet having a body wherein at least one growing unit is placed. The growing units are located consecutively and in vertical direction having light sources located in between. The growing trays are placed inside the growing units and are filled with turf mixture wherein the plants are planted. The growing units, depending on its area and shape, may host two or more growing trays. The growing tray has a frame and the frame is peripherally extending outwards from the growing tray so as to provide a surface with which the growing tray is placed on to the growing unit. The growing tray has at least one perforation provided at its base so as to fluidly connect the growing unit with the growing tray. A filter is placed inside the growing tray so as to separate the turf mixture from the growing tray. The filter is in the form of a thin film and allows passage of water whereas dust, soil, fibers and similar micro particles separated from the turf mixture is blocked. Therefore, clogging of the perforations is prevented. The filter is placed on to the growing tray and extends along the inner side walls of the growing tray and the frame respectively therefore separating the turf mixture from the growing tray completely. The filter is fixed on to the frame via a flap, having a first magnet attached on to it. A second magnet is configured to be placed underneath the frame so as to vertically align with the first magnet upon attaching the flap on to the frame. The magnetic attraction fixes the filter in between the frame and the flap. By this means, the filter is stabilized inside the growing tray preventing the filter from sliding while adding the turf mixture. As a result, clogging of perforations and the water conduit caused by the particles separating from the turf mixture is prevented.

In another embodiment of the invention, the flap is rotatable attached to the frame via a pair of protrusions extending from the frame which are facing each other across the recess formed so as to provide an area for the flap to rotatable settle in. The flap has corresponding bores wherein the protrusions are inserted thereby rotatable attaching the flap with respect to the frame and the growing tray. Upon rotation of the flap, the flap settles on to the frame in a form fitting manner and tightly secures the filter. In this position second magnet and the first magnet are vertically aligned therefore creating a magnetic attraction which helps keeping the flap and therefore the filter in a fixed position. Should the user needs to replace the filter and the turf mixture, the flap has to be rotated to the opposite direction thereby releasing the filter from the growing tray.

In another embodiment of the invention, the filter is fixed on to the frame via a plurality of flaps extending along the perimeter of the frame. Multiple flaps provides rigid fixation of the filter.

In the mentioned embodiment of the invention, the second magnet is inserted inside a slot under the frame. The frame between the second magnet and the first magnet is thinned so as to maximize the magnetic attraction between the magnets therefore fixing the filter in an unmovable manner.

In the mentioned embodiment of the invention, the filter is form fittingly placed inside the growing tray. Therefore, the filter is placed on to the growing tray leaving no gaps in between which helps to keep the dust, soil, fibers and similar micro particles inside the filter thus preventing blocking of the water conduits and the perforation. Another advantageous effect of the current embodiment is that the turf mixture does not directly contact the growing tray thereby making it easier to take out the used turf mixture and cleaning the growing tray.

In the mentioned embodiment of the invention, the filter is produced in the shape of "+". The shape the filter has, provides ease of use for the user while removing old and used turf mixture. Another advantage is that the geometric shape the filter has, allows folding and stacking of multiple filters in a smaller volume.

In another embodiment of the invention, the filter is produced in the shape of a rectangular prism having an open top. The filter also extends from the open top edges thereby sitting on to the frame which helps fixing the filter via the flap. The filter is formed so as to leave no openings in between itself and the growing tray which helps to keep the dust, soil, fibers and similar micro particles inside the filter thus preventing blocking of the water conduits and the perforation.

In another embodiment of the invention, a flap is attached on to the frame. The flap is shaped as a rectangle and the long edge of the flap, which is shorter than the corresponding edge of the frame, extends along the frame and is settled on to the frame.

In another embodiment of the invention, the filter is made of a selectively permeable material. By doing so, dust, soil, fibers and similar micro particles of the turf mixture are captured on the filter. Meanwhile, water, minerals and organic and inorganic molecules dissolved in water permeate through the filter. Ergo, the filter prevents the perforation and the water transmission and discharge lines of the plant growing cabinet from clogging.

In another embodiment of the invention, in the plant growing cabinet, the mesh of the filter are shaped as squares or equilateral quadrangles, each side having a length of less than 0.25 mm. Thereby, dust, soil, fibers and similar micro particles released from the turf mixture that are likely to clog the perforation or the water conduits are prevented from going through the filter.

In another embodiment, the filter is washable. Therefore, same filter may be used for multiple cycles, decreasing the overall operational cost of the plant growing cabinet.

By means of the present invention, a plant growing cabinet having improved anti clogging properties by utilizing a filter seated inside and fixed with respect to a growing tray is provided. The filter is fixed via at least a flap having a first magnet and a corresponding second magnet placed underneath the frame of the growing tray is provided so as to create a magnetic attraction.

Another advantageous effect of this invention is that the risk of clogging of the water transmission and discharge lines is minimized thereby decreasing the maintenance costs and the time spent to sustain operations of the plant growing cabinet.

The drawings are not meant to delimit the scope of protection as identified in the claims nor should they be referred to alone in an effort to interpret the scope identified in the claims without recourse to the technical disclosure in the description of the present invention.

- Figure 1 -: is a front view of the plant growing cabinet
- Figure 2 -: is an exploded view of the growing unit and the growing tray
- Figure 3 -: is a side view of the growing tray
- Figure 4 -: is a side view of the growing tray with the filter being placed inside
- Figure 5 -: is a side view of the growing tray having multiple flaps
- Figure 6 -: is a side view of the growing tray having multiple flaps

The following numerals are assigned to different parts demonstrated in the drawings and referred to in the present detailed description of the invention:
1. Plant growing cabinet
2. Body
3. Growing unit
4. Growing tray
5. Frame
6. Perforation
7. Filter
8. Flap
9. First magnet
10. Second magnet
11. Slot

The present invention relates to plant growing cabinet (1) comprising; a body (2) in which at least one growing unit (3) is placed, a growing tray (4) which is placed in to the growing unit (3) via a frame (5) peripherally extending away from the growing tray (4) and wherein the growing tray (4) has at least one perforation (6) at its base so as to allow passage of water between the growing unit (3) and the growing tray (4), a filter (7) is placed on to the growing tray (4) whereon the turf mixture enabling the plants to grow is placed thereby preventing the propagation of the turf mixture between the growing tray (4) and the growing unit (3) and clogging the at least one perforation (6).

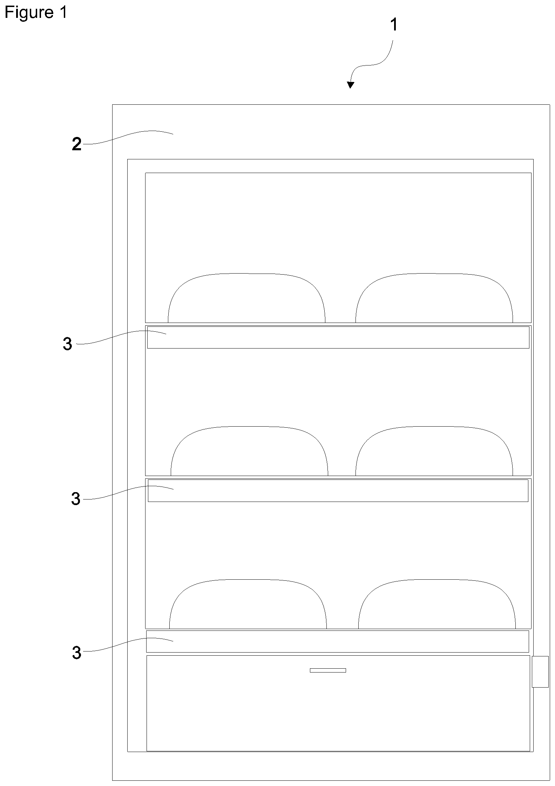

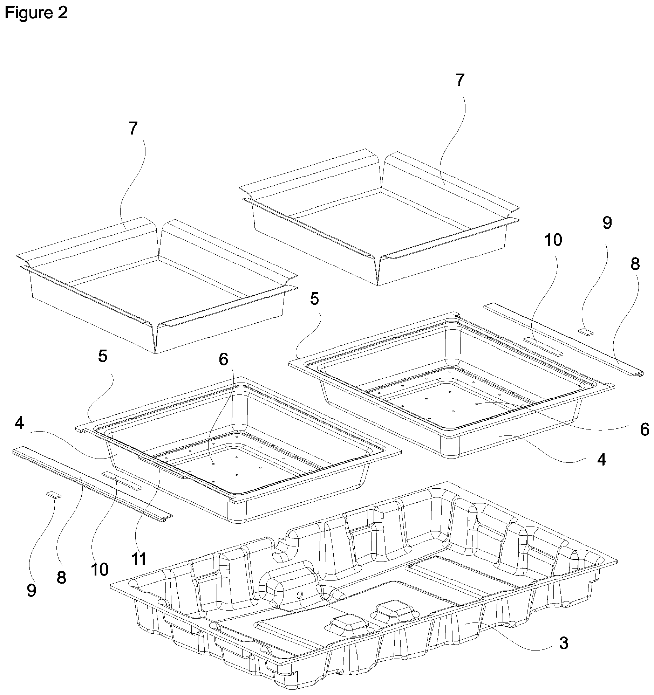

The present invention relates to a plant growing cabinet (1) comprising; the growing tray (4) having a flap (8) extending at least partially along the frame (5) and fixing the filter (7) in between the frame (5) and the flap (8) via a first magnet (9) fixed on to the flap (8) and a second magnet (10) placed underneath the frame (5), wherein the first magnet (9) is configured to vertically coincide with the second magnet (10). The growing tray (4) is placed in to the growing unit (3) and acts as a chamber in which turf mixture and similar mixtures that is required for the plants to grow and to root is placed. The growing tray (4) is placed on to the growing unit (3) via the frame (5). Multiple number of the growing trays (4) can be placed side by side in to the growing unit (3). The base of the growing tray (4) is perforated thereby fluidly connecting the growing tray (4) with the growing unit (3) via the perforation (6). During watering of the growing unit (3), water level inside the growing unit (3) rises and the water enters the growing tray (4) via the perforation (6). After the watering is finished, the remaining water is allowed to drain out of the growing tray (4) and the growing unit (3). During the drain, dust, soil, fibers and similar micro particles within the turf mixture exits the growing tray (4) and enters the growing unit (3) via the perforation (6). The filter (7) is placed to cover the base of the growing tray (4) before the turf mixture so as to separate the turf mixture from the perforation (6) and the growing tray (4). Therefore, during watering the turf mixture does not clog the perforation (6) or fill the volume between the growing tray (4) and the growing unit (3) causing further clogging. The filter (7) covers the base of the growing tray (4) and extends upwardly along the inner side surface of the growing tray (4) and towards the frame (5). Therefore, the filter (7) ensures that the turf mixture does not directly contact the growing tray (4), preventing both the clogging of the water conduits connected to the growing unit (3) and the at least one perforation (6) provided at the base of the growing tray (4). The filter (7) is fixed on the frame (5) via the flap (8). The flap (8) has the first magnet (9) attached on to it. Upon attachment of the flap (8) on to the frame (5), first magnet (9) coincides with the second magnet (10) placed underneath the frame (5) thereby creating a magnetic force between the first magnet (9) and the second magnet (10) that is utilized to hold the filter (7) between the flap (8) and the frame (5) in an unmovable manner. Therefore, ease of use is provided for the user to stabilize the filter (7) inside the growing tray (4). Additionally, the filter (7) is placed inside the growing tray (4) immovably, thereby preventing the filter (7) to slide sideways as the user adds the turf mixture. As a result, clogging of the perforations (6) and the water conduits is prevented which creates ease of use and decreases the maintenance costs by eliminating possible malfunctions caused by clogging. (Figure 1 & 2)

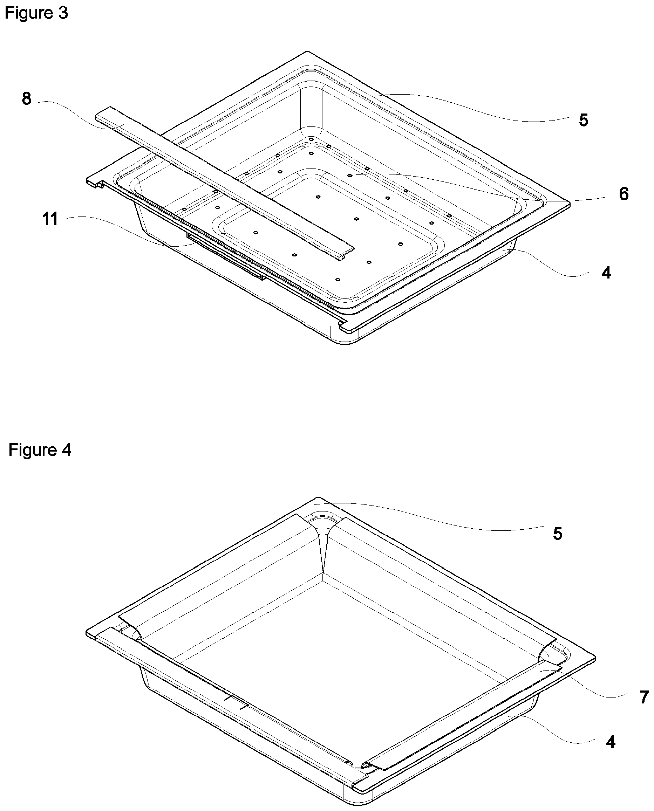

In another embodiment of the present invention, the flap (8) is pivotally attachable along its length to a side of the frame (5). The flap (8) is attached to the frame (5) via a recess opened along the length of the edge of the frame (5). Two cylindrical protrusions are formed, facing each other across the recess which are inserted to the flap (8) via two bores provided on both ends of the flap (8), thereby allowing the flap (8) to rotate relative to the frame (5). The flap (8) has the first magnet (9) attached to its surface, which upon rotation align with the second magnet (10) in vertical direction thereby creating a magnetic attraction between the first magnet (9) and the second magnet (10), securing the filter (7) along the frame (5). The flap (8), upon rotation, settles form fittingly on to the frame (5) creating a robust structure and therefore, preventing slippage of the filter (7). (Figure 3 & 4)

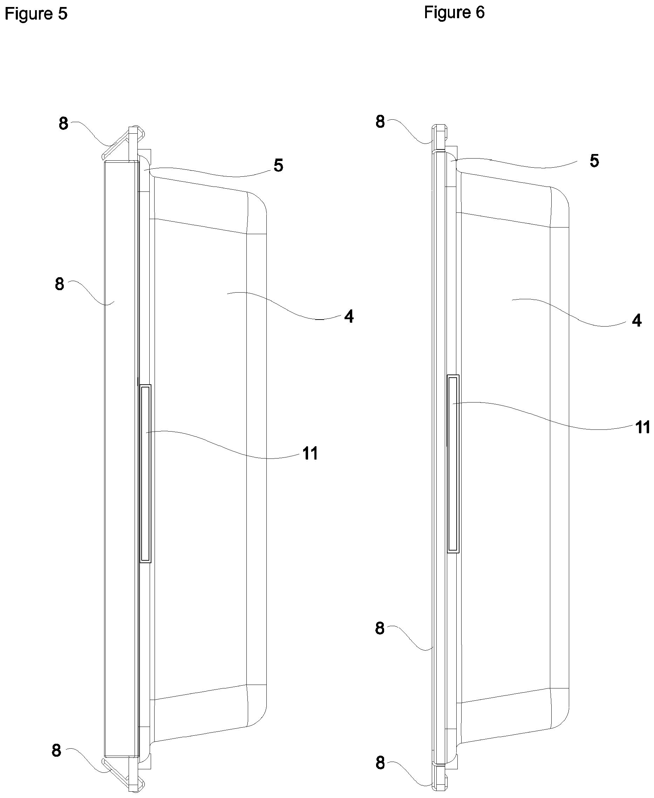

In another embodiment of the present invention, the filter (7) is fixed on to the frame (5) via a plurality of flaps (8). Multiple flaps (8) having first magnets (9), configured to coincide with the second magnets (10) upon attachment of the flap (8) are provided along the edges of the frame (5). By this means, the filter (7) is fixed along the perimeter of the frame (5) in an unmovable way. (Figure 5 & 6)

In another embodiment of the present invention, the second magnet (10) is placed inside a slot (11) located underneath the frame (5). The slot (11) is utilized to keep the second magnet (10) in place thereby providing ease of use for the user while vertically aligning the first magnet (9). Another advantageous effect of the slot (11) is that the location of the slot (11) is equidistant to both ends of the frame (5), minimizing the number of the first magnets (9) and the second magnets (10) to be used in order to fix the filter (7) on to the frame (5).

In another embodiment of the present invention, the filter (7) is form fittingly placed on to the growing tray (4). The filter (7) covers the base of the growing tray (4) and further extends towards the frame (5) via the inner side walls of the growing tray (4) and formed so as to match the volume defined by the growing tray (4). By this means, filter (7) almost completely covers the inner surface of the growing tray (4) preventing the turf mixture to get in contact with the growing tray (4).

In another embodiment of the present invention, the filter (7) is produced from a selectively permeable membrane. The selective permeability of the filter (7) allows water molecules, organic and inorganic compounds dissolved in water to easily pass through the filter (7), whereas dust, soil, fibers and similar particles released from the turf mixture are caught by the filter (7). Thus the blockage of the perforations (6) and the water conduit is prevented, improving maintenance cost of the plant growing cabinet (1).

In another embodiment of the present invention the plant growing cabinet comprises a filter (7) having a mesh structure consisting of squares or equilateral quadrangles having a side length varying in the range of 0 to 0.25 mm. The mixture contains dust, soil, fibers and similar particles. During watering of the growing unit (3), the growing unit (3) is flooded with water and afterwards the water is allowed to drain therefore accumulating the aforementioned particles over the filter (7). By means of the micro-mesh structure of the filter (7) particles with a diameter larger than a side of the mesh structure are unable to escape through the filter (7), thereby preventing blockages and improving spare part costs of the plant growing cabinet (1).

In the plant growing cabinet (1) of the present invention, clogging of the perforations (6) and the water conduits caused by the micro particles originating from the turf mixture is prevented by placing the filter (7) in to the growing tray (4). The filter (7) is fixed on to the frame (5) by utilization of the flap (8) having the first magnet (9) which vertically aligns with the second magnet (10) below the frame (5) to fix the filter (7) in an unmovable manner by magnetic attraction.

## Claims

1. A plant growing cabinet (1) comprising; a body (2) in which at least one growing unit (3) is placed, a growing tray (4) which is placed in to the growing unit (3) via a frame (5) peripherally extending away from the growing tray (4) and wherein the growing tray (4) has at least one perforation (6) at its base so as to allow passage of water between the growing unit (3) and the growing tray (4), a filter (7) is placed on to the growing tray (4) whereon the turf mixture enabling the plants to grow is placed thereby preventing the propagation of the turf mixture between the growing tray (4) and the growing unit (3) and clogging the at least one perforation (6), wherein the growing tray (4) has a flap (8) extending at least partially along the frame (5) and fixing the filter (7) in between the frame (5) and the flap (8) via a first magnet (9) fixed on to the flap (8) and a second magnet (10) placed underneath the frame (5), wherein the first magnet (9) is configured to vertically coincide with the second magnet (10).

2. A plant growing cabinet (1) according to claim 1, **characterized by** the flap (8) being pivotally attachable along the frame (5).

3. A plant growing cabinet (1) according to any one of the preceding claims, **characterized by** the filter (7) being fixed on to the frame (5) via a plurality of flaps (8).

4. A plant growing cabinet (1) according to any one of the preceding claims, **characterized by** the second magnet (10) being placed inside a slot (11) located underneath the frame (5).

5. A plant growing cabinet (1) according to any one of the preceding claims, **characterized by** the filter (7) being form fittingly placed on to the growing tray (4).

6. A plant growing cabinet (1) according to any one of the preceding claims, **characterized by** the filter (7) being formed by a selectively permeable membrane.

7. A plant growing cabinet (1) according to any one of the preceding claims, **characterized by** the filter (7) having a mesh structure consisting of squares or equilateral quadrangles having a side length varying in the range of 0 to 0.25 mm.

## Patentansprüche

1. Ein Pflanzenzuchtschrank (1) umfasst einen Körper (2), in dem mindestens eine Wachstumseinheit (3) angeordnet ist, eine Anzuchtschale (4), die über einen Rahmen (5), der sich peripher von der Anzuchtschale (4) weg erstreckt, in die Anzuchteinheit (3) eingesetzt wird und wobei die Anzuchtschale (4) mindestens eine Perforation (6) an ihrer Basis aufweist, um einen Durchgang von Wasser zwischen der Anzuchteinheit (3) und der Anzuchtschale (4) zu ermöglichen, einen Filter (7), der auf der Anzuchtplatte (4) platziert ist, worauf die Rasenmischung platziert wird, die das Wachstum der Pflanzen ermöglicht, wodurch die Ausbreitung der Rasenmischung zwischen der Anzuchtplatte (4) und der Anzuchteinheit (3) und das Verstopfen der mindestens einen Perforation (6), verhindert wird, wobei die Anzuchtschale (4) eine Klappe (8) aufweist, die sich zumindest teilweise entlang des Rahmens (5) erstreckt und den Filter (7) zwischen dem Rahmen (5) und der Klappe (8) fixiert ist, durch einen ersten Magneten (9), der an der Klappe (8) befestigt ist und einen zweiten Magneten (10), der unter dem Rahmen (5) angeordnet ist, wobei der erste Magnet (9) so konfiguriert ist, dass er vertikal mit dem zweiten Magnet (10) zusammenfällt.

2. Ein Pflanzenzuchtschrank (1), wie in Anspruch 1 aufgeführt, **ist dadurch gekennzeichnet, dass** die Klappe (8) schwenkbar entlang dem Rahmen (5) anbringbar ist.

3. Ein Pflanzenzuchtschrank (1), wie in einem der vorherigen Ansprüchen aufgeführt, **ist dadurch gekennzeichnet, dass** der Filter (7) über mehrere Klappen (8) am Rahmen (5) befestigt ist.

4. Ein Pflanzenzuchtschrank (1), wie in einem der vorherigen Ansprüchen aufgeführt, **ist dadurch gekennzeichnet, dass** der zweite Magnet (10) in einem Schlitz (11) angeordnet ist, der sich unterhalb des Rahmens (5) befindet.

5. Ein Pflanzenzuchtschrank (1), wie in einem der vorherigen Ansprüchen aufgeführt, **ist dadurch gekennzeichnet, dass** der Filter (7) formschlüssig auf der Aufzuchtschale (4) angeordnet ist.

6. Ein Pflanzenzuchtschrank (1), wie in einem der vorherigen Ansprüchen aufgeführt, **ist dadurch gekennzeichnet, dass** der Filter (7) durch eine selektiv durchlässige Membran gebildet ist.

7. Ein Pflanzenzuchtschrank (1), wie in einem der vorherigen Ansprüchen aufgeführt, **ist dadurch gekennzeichnet, dass** der Filter (7) eine Maschenstruktur aufweist, die aus Quadraten oder gleichseitigen Vierecken mit einer Seitenlänge besteht, die im Bereich von 0 bis 0,25 mm variiert.

## Revendications

1. Un armoire de culture de plantes (1) comprenant ; un corps (2) dans lequel est placé au moins une unité de culture (3), un plateau de culture (4) qui est placé dans l'unité de culture (3) par l'intermédiaire d'un cadre (5) s'étendant de manière périphérique à partir du plateau de culture (4) et dans lequel le plateau de culture (4) a au moins une perforation (6) à sa base de manière à permettre le passage de l'eau entre l'unité de culture (3) et le plateau de culture (4), un filtre (7) est placé sur le plateau de culture (4) sur lequel est placé le mélange de gazon permettant aux plantes de pousser, empêchant ainsi la propagation du mélange de gazon entre le plateau de culture (4) et l'unité de culture (3) et le colmatage d'au moins une perforation (6), dans lequel le plateau de culture (4) a un rabat (8) s'étendant au moins partiellement le long du cadre (5) et fixant le filtre (7) entre le cadre (5) et le rabat (8) par l'intermédiaire d'un premier aimant (9) fixé sur le rabat (8) et d'un second aimant (10) placé sous le cadre (5), dans lequel le premier aimant (9) est configuré pour coïncider verticalement avec le second aimant (10).

2. Une armoire de culture de plantes (1) selon la déclaration 1, **est caractérisé en ce que** le volet (8) peut être fixé de manière pivotante le long du cadre (5).

3. Une armoire de culture de plantes (1) selon l'une quelconque des déclarations précédentes, **est caractérisée en ce que** le filtre (7) est fixé sur le cadre (5) par l'intermédiaire d'une pluralité de volets (8).

4. Une armoire de culture de plantes (1) selon l'une quelconque des déclarations précédentes, **est caractérisée en ce que** le deuxième aimant (10) est placé à l'intérieur d'une fente (11) située sous le cadre (5).

5. Une armoire de culture de plantes (1) selon l'une quelconque des déclarations précédentes, **est caractérisée en ce que** le filtre (7) est placé de manière ajustée sur le plateau de culture (4).

6. Une armoire de culture de plantes (1) selon l'une quelconque des déclarations précédentes, **est caractérisée en ce que** le filtre (7) est formé par une membrane sélectivement perméable.

7. Une armoire de culture de plantes (1) selon l'une quelconque des déclarations précédentes, **est caractérisée en ce que** le filtre (7) a une structure de maille constituée de carrés ou de quadrangles équilatéraux ayant une longueur de côté variant dans la gamme de 0 à 0,25 mm.
